# EUROPEAN PATENT SPECIFICATION

(11) **EP 3 686 576 B1**
(45) Date of publication and mention of the grant of the patent: **28.12.2022**
(21) Application number: 18859726.4
(22) Date of filing: 22.06.2018
(51) Int. Cl.: G01N 21/27, G01N 21/47, B60W 40/06, G01N 21/3554, G01N 21/359

(54) **ROAD-SURFACE-DETECTION DEVICE AND VEHICLE**
STRASSENOBERFLÄCHENDETEKTOR UND FAHRZEUG
DISPOSITIF DE DÉTECTION DE SURFACE DE ROUTE ET VÉHICULE

(30) Priority: 20.09.2017 JP 2017180075
(43) Date of publication of application: 29.07.2020
(73) Proprietor: Yamaha Hatsudoki Kabushiki Kaisha, Iwata-shi, Shizuoka 438-8501 (JP)
(72) Inventor: OOHORI, Noriko, Iwata-shi Shizuoka 438-8501 (JP); MOROMOTO, Hiroyuki, Iwata-shi Shizuoka 438-8501 (JP)
(74) Representative: Zimmermann, Tankred Klaus
(86) International application number: PCT/JP2018/023852
(87) International publication number: WO 2019/058682

(56) References cited:
- JP-A- H04 110 261
- JP-A- H04 110 261
- JP-A- 2008 292 195
- JP-A- 2013 533 159
- JP-A- 2015 197 358
- JP-A- 2017 083 352
- KR-B1- 101 718 929
- US-A- 4 690 553
- US-A1- 2013 103 274

## Description

### TECHNICAL FIELD

The present teaching relates to a road-surface-detection device for detecting the type of a road surface and also relates to a vehicle including such a device.

### BACKGROUND ART

The movement of a vehicle is affected by a friction force between a road surface and tires. Thus, detection of the type of a road surface on which the vehicle is traveling, such as a dry state, a wet state, and a frozen state of the road surface, and the material of the road surface are considered to contribute to safety enhancement of driving. Patent Document 1, for example, discloses a technique for identifying a dry state, a wet state, and a frozen state of a road surface.

Patent Document 1 discloses a road surface state detection sensor including: a light source of wavelengths in at least an infrared range; a light detection means for individually detecting light intensities of two or more specific wavelengths of reflected light that is projected light emitted from the light source and reflected on one or both of a water film and an ice layer on a road surface; and a signal processing means for processing an output signal based on a plurality of specific wavelengths from the light detection means. The road surface state detection sensor identifies a road surface state based on relative light intensities of the plurality of specific wavelengths. In the road surface state detection sensor of Patent Document 1, the light detection means detects specular reflection of light emitted from the light source and reflected on a road surface.

That is, the road surface state detection sensor of Patent Document 1 detects a dry state, a wet state, and a frozen state of a road surface based on relative light intensities of a plurality of specific wavelengths.

### CITATION LIST

### PATENT DOCUMENT

Patent Document 1: Japanese Patent Application Publication No. 2005-43240 JP H04 110261 A discloses a road surface characteristic sensor that is constituted of sensors, and a computer equipped with an input membership function memory means, output membership function memory means, fuzzy estimation means, etc., and that constitutes a road surface state estimation means. US 2013/103274 A1 relates to a method and a device for controlling at least one driver assistance system of a vehicle. The method comprises emitting light of at least one wavelength onto a road surface under the vehicle, and detecting light of the at least one wavelength reflected by the road surface. US 4 690 553 A discloses a road surface condition detection system comprising light projector means for projecting light including the infrared region of the spectrum to a road surface to sense the condition thereof. KR 101 718 929 B1 discloses a road surface condition detecting apparatus, comprising a light emitting unit installed in a vehicle and irradiating visible light toward a road surface which is a predetermined distance ahead of the vehicle; a light receiving unit installed in the vehicle and receiving light reflected from the road surface and measuring light intensity or pulse of the received reflected light.

### SUMMARY OF INVENTION

### TECHNICAL PROBLEM

There are various types of road surfaces. That is, constituents of road surfaces are made of various materials and have various colors. Road surfaces are also provided with various road markings and division lines. Thus, reflected light reflected on road surfaces shows different spectral characteristics. The spectral characteristics of the reflected light also vary depending on a road surface state such as frozen, wet, and dry.

The configuration described in Patent Document 1 detects specular reflections of infrared light showing different water absorptances, and thus, can detect a dry state, a wet state, and a frozen state of road surfaces. The configuration of Patent Document 1, however, utilizes a difference in water absorptance, and thus, it is difficult to detect materials of road surfaces.

The present teaching has an object of providing a road-surface-detection device capable of detecting a material of a road surface as well as a road surface in a dry state, a road surface in a wet state, and a road surface in a frozen state.

### SOLUTION TO PROBLEM

There is provided a road-surface-detection device mountable to a vehicle, according to independent claim 1. Preferred embodiments of the invention are defined with the dependent claims.

Through intensive studies, inventors of the present teaching found that in the case of a light source of visible light, reflection intensities of reflected light reflected on a road surface of a color close to the color of a visible light wavelength are high, and reflection intensities of light reflected on road surfaces of the other colors are low.

In view of this, the inventors conceived that reflected light obtained by reflection of light of a plurality of different wavelengths in at least a visible light range is used for detection of the type of a road surface. As a result of studies, the inventors found that the type of a road surface including the color of the road surface can be detected by comparing reflection intensities of light of a plurality of wavelengths in the reflected light.

The inventors focused on a phenomenon that a road surface in a dry state, a road surface in a wet state, a road surface in a frozen state, and a road surface in a compacted snow state, for example, can also be detected by using reflected light of the plurality of different wavelengths reflected on a road surface. That is, the inventors found that not only the state of the road surface, such as the road surface in a dry state, the road surface in a wet state, the road surface in a frozen state, and the road surface in a compacted snow state, but also a material of a road surface including the color of the road surface can be detected by using light of different wavelengths reflected by the road surface.

In the case of applying light to a road surface, the direction of reflection of light and the reflection intensity of reflected light vary depending on the type of the road surface. In a case where the color of the road surface is close to the color of the wavelength of visible light from the light source, the reflection intensity of the reflected light is high, whereas when the color of the road surface is different from the color of the wavelength of visible light from the light source, the reflection intensity of the reflected light is low. In view of this, based on the reflection intensities of reflected light having a plurality of different wavelengths detected by the detector for detecting reflected light of visible light, the road surface determiner can determine the type of the road surface depending on the color of the road surface. That is, the detector detects reflection intensities of reflected light of a plurality of different wavelengths so that the road surface determiner can detect not only a road surface in a dry state, a road surface in a wet state, a road surface in a frozen state, and a road surface in a compacted snow state but also a material of the road surface, based on the reflection intensities of wavelengths.

In an embodiment, the road-surface-detection device of claim 1 furthermore includes the following configuration. The light source emits light to a road surface ahead of a wheel of the vehicle, and the detectors detect reflection intensities of reflected light that is emitted from the light source, reflected on the road surface, and returning toward the light source.

This configuration can detect the type of a road surface ahead of a wheel of the vehicle.

According to the invention, the road surface determiner is configured to perform a comparison on reflection intensities of reflected light having the plurality of different wavelengths and, based on a result of the comparison, is configured to determine a type of the road surface.

With this configuration, a road surface provided with a white line and a road surface in a compacted snow state can be determined and distinguished from each other.

In another embodiment, the road-surface-detection device as defined with claim 1 further includes, *inter alia,* a headlight including the light source configured to irradiate a road surface ahead of a wheel of the vehicle; the detectors are disposed inside the headlight, each of the detectors being configured to detect reflected light of the plurality of wavelengths including at least one type of visible light, in reflected light that is emitted from the light source, and reflected on the road surface.

Light of the light source of the headlight is not of a single wavelength but is mainly visible light including a plurality of wavelengths. Reflected light returning toward the light source includes a plurality of types of wavelengths. Thus, the road-surface-detection device can utilize the light source of the headlight as a light source for the road-surface-detection device without preparing an additional light source. In addition, the detectors are disposed inside the headlight so that the road-surface-detection device can be mounted on the vehicle without a change in vehicle appearance.

According to the invention as defined with claim 1, the road surface determiner is configured to perform a comparison on each of reflection intensities of the reflected light having the plurality of wavelengths and detected by the detectors with a threshold and, based on a result of the comparison, determines a type of the road surface.

With this configuration, the type of a road surface can be more accurately detected.

In another embodiment, the light source may be a white light source.

Since the white light source emits light in visible light to near-infrared wavelength ranges, the detector can detect reflected light of a plurality of different wavelengths including at least one type of visible light in the visible light to near-infrared wavelength ranges without utilizing a plurality of light sources.

According to the invention, when the visible light range is divided into three ranges of a short-wavelength range, a middle-wavelength range, and a long-wavelength range depending on a wavelength, the the limitations as defined with claim 1 mean that the detectors are configured to detect reflected light in at least two of the three wavelength ranges, one of them being the long-wavelength range.

With this configuration, the road surface determiner can determine the type of a road surface based on reflection intensities of reflected light in different wavelength ranges. Thus, the type of the road surface can be determined in detail.

When the visible light range is divided into three ranges of a short-wavelength range, a middle-wavelength range, and a long-wavelength range depending on a wavelength, a first detector is configured to detect reflected light in the short-wavelength range or the middle-wavelength range and a second detector is then configured to detect reflected light from the long-wavelength range to a near-infrared wavelength range, respectively.

With respect to reflection intensities of reflected light from the long-wavelength range to the near-infrared wavelength range in the visible light range, the reflection intensity of reflected light on a road surface in a dry state is higher than the reflection intensity of reflected light on a road surface in a wet state. The difference in reflection intensity of reflected light in the long-wavelength range to the near-infrared wavelength range in the visible light range between the road surface in the dry state and the road surface in the wet state is higher than the reflection intensity of reflected light in the short-wavelength range or the middle-wavelength range in the visible light range. With this configuration, reflected light in the long-wavelength range to the near-infrared wavelength ranges in the visible light range is detected so that a road surface in a dry state and a road surface in a wet state can be easily detected.

According to the invention as defined with claim 1, each of detectors includes a filter that allows light of a specific wavelength to pass through the filter, and a light-receiving device.

The detector including the filter and the light-receiving device can detect reflected light of desired wavelength.

In another embodiment, the light source may include an LED light source.

In another embodiment, the light source may include an auxiliary light source that emits light in a near-infrared wavelength range.

This configuration can increase the intensity of reflected light having a wavelength in the near-infrared wavelength range and can easily detect a road surface in a dry state and a road surface in a wet state.

In another embodiment, a vehicle includes the road-surface-detection device according to the invention.

The terminology used herein is for the purpose of describing particular embodiments only and is not intended to be limiting of the invention. The invention is limited by the appended claims.

As used herein, the term "and/or" includes any and all combinations of one or more of the associated listed items.

It will be further understood that the terms "including," "comprising" or "having" and variations thereof when used in this specification specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention as defined and limited by the claims.

Embodiments of a road-surface-detection device according to the present teaching will be herein described.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Reflected Light Back to Light Source]

Reflected light back to a light source herein refers to light that is emitted from a light source and reflected on a road surface and travels toward the light source, and includes light shifted to a direction orthogonal to an optical axis of the light source and traveling toward the light source.

### [Vehicle]

A vehicle used herein refers to transportation equipment including one or more wheels, and includes a two-wheel vehicle, a three-wheel vehicle, and a four-wheel vehicle, for example.

### [Road Surface Type]

In this specification, the types of road surfaces refer to the types of road surfaces having different friction coefficients, and include the types of constituents constituting the road surfaces and the states of road surfaces, for example. Examples of the constituents constituting road surfaces include colored asphalt, concrete, sand, asphalt, manholes, iron plates, and identification signs such as road markings and division lines provided on the road surfaces. Examples of the types of road surfaces include a road surface in a dry state, a road surface in a wet state, a road surface in a frozen state, and a road surface in a compacted snow state.

### [Short Wavelength Light in Visible Light Range]

Short wavelength light in a visible light range herein refers to blue light, and mainly refers to light of a wavelength from 380 nm through 500 nm.

### [Middle Wavelength Light in Visible Light Range]

Middle wavelength light in a visible light range herein refers to green light, and mainly refers to light of a wavelength from 500 nm through 600 nm.

### [Long Wavelength Light in Visible Light Range]

Long wavelength light in a visible light range herein refers to red light, and mainly refers to light of a wavelength from 600 nm through 780 nm.

### [Extraneous Light]

Extraneous light herein refers to light except for light emitted from a light source and reflected light of the light emitted from the light source.

### ADVANTAGEOUS EFFECTS OF INVENTION

One embodiment of the present teaching can provide a road-surface-detection device capable of detecting a material of a road surface as well as a road surface in a dry state, a road surface in a wet state, and a road surface in a frozen state.

### BRIEF DESCRIPTION OF DRAWINGS

[FIG. 1] FIG. 1 is a view illustrating a schematic configuration of a vehicle including a road-surface-detection device according to a first embodiment of the present teaching.
[FIG. 2] FIG. 2 is a functional block diagram illustrating a configuration of the road-surface-detection device according to the first embodiment of the present invention.
[FIG. 3] FIG. 3 is a table showing, as High (H) or Low (L), reflection intensities of reflected light in a red wavelength range and reflected light in a blue wavelength range in reflected light reflected on a target surface in a case where light is applied to a target surface of each color.
[FIG. 4] FIG. 4 is a table showing relationships between the type of a road surface and reflection intensities of reflected light in the red wavelength range and reflected light in the blue wavelength range in reflected light reflected on road surfaces in a case where light is applied to a road surface with a white line and a road surface in a compacted snow state.
[FIG. 5] FIG. 5 is a flowchart depicting an operation of the road-surface-detection device according to the first embodiment of the present teaching.
[FIG. 6] FIG. 6 is a flowchart depicting a white determination process operation of a road-surface detection device.
[FIG. 7] FIG. 7 is a block diagram illustrating a configuration of a verification device which lies outside the scope of the present invention.
[FIG. 8] FIG. 8 is an illustration showing a result of detection of various road surfaces using a device illustrated in the FIG. 7.
[FIG. 9] FIG. 9 is a schematic view illustrating road surfaces used for verification.
[FIG. 10] FIG. 10 is a graph showing results of measurements of reflection intensities on the road surfaces when a blue LED element emits light.
[FIG. 11] FIG. 11 is a graph showing results of measurements of reflection intensities on the road surfaces when a red LED element emits light.
[FIG. 12] FIG. 12 is a functional block diagram illustrating a configuration of a road-surface-detection device according to a second embodiment of the present invention.
[FIG. 13] FIG. 13 is a functional block diagram illustrating a configuration of a road-surface-detection device according to a third embodiment of the present invention.
[FIG. 14] FIG. 14 is a functional block diagram illustrating a configuration of a road-surface-detection device according to a fourth embodiment of the present invention.
[FIG. 15] FIG. 15 is a view illustrating a vehicle including the road-surface-detection device according to the first embodiment of the present invention and configurations of the road-surface-detection device.

### DESCRIPTION OF EMBODIMENT

Embodiments of the present teaching will be described hereinafter with reference to the drawings. The dimensions of components in the drawings do not strictly represent actual dimensions of the components, dimensional proportions of the components, and so forth.

The following description will be described by using a motorcycle as an example of transport equipment. Thus, arrow F in the drawings represents a forward direction of the motorcycle. Arrow U in the drawings represents an upward direction of the motorcycle. Forward, rearward, leftward, and rightward directions respectively represent forward, rearward, leftward, and rightward directions when seen from a rider driving the motorcycle.

### (First Embodiment)

### <Overall Configuration>

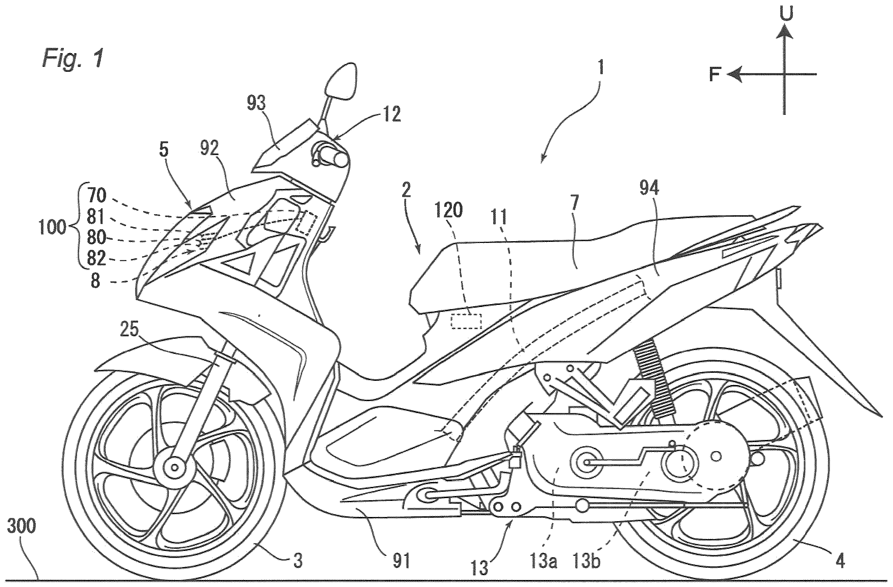

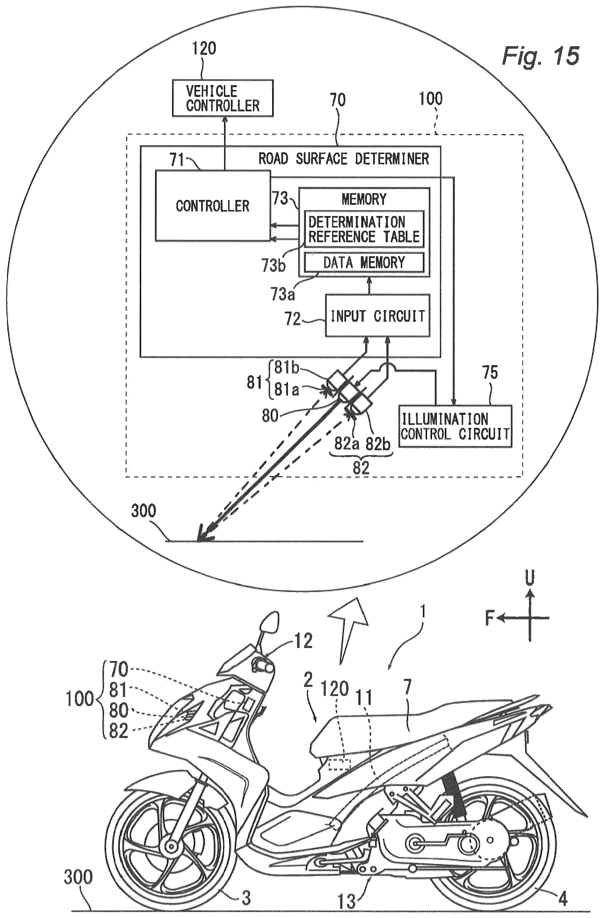

FIG. 15 is a view illustrating a vehicle 1 including a road-surface-detection device 100 according to a first embodiment of the present invention and components of the road-surface-detection device 100. FIG. 1 is a view illustrating a schematic configuration of the vehicle 1 including the road-surface-detection device 100. In this embodiment, the vehicle 1 includes a motorcycle having a typical configuration. The vehicle 1 is not limited to the motorcycle, and may be a vehicle such as a three-wheel vehicle or a four-wheel vehicle. The road-surface-detection device 100 will be described later.

The vehicle 1 includes a vehicle body 2, a front wheel 3, a rear wheel 4, a seat 7, a handlebar 12, a power unit 13, a road-surface-detection device 100, and a vehicle controller 120. The vehicle body 2 includes a vehicle body frame 11. The vehicle body 2 supports components including the seat 7, the handlebar 12, the power unit 13, and the road-surface-detection device 100.

The vehicle body frame 11 includes an unillustrated head pipe. The head pipe is disposed in a front portion of the vehicle 1.

An unillustrated steering shaft is disposed in the head pipe. The handlebar 12 is connected to the upper end of the steering shaft to be rotatable about the head pipe. A pair of parallel front suspensions 25 is connected to the steering shaft. The front wheel 3 is rotatably attached to the lower ends of the pair of front suspensions 25.

The vehicle body frame 11 having the configuration described above is covered with a vehicle body cover 5. The vehicle body cover 5 is made of, for example, a resin material. The vehicle body cover 5 includes a foot board 91 disposed in a lower portion of the vehicle, a foot cover 92 disposed in a front portion of the vehicle, a handlebar cover 93 covering the handlebar 12, and side covers 94 disposed at the sides of the vehicle.

The power unit 13 is located between the vehicle body frame 11 and the rear wheel 4. The power unit 13 includes, for example, an engine 13a and a driving force transfer device 13b. A driving force transfer device 13b for transferring a driving force from the engine 13a to the rear wheel 4 is disposed at the rear of the engine 13a in the vehicle. That is, the engine 13a is disposed in a front portion of the power unit 13 and the driving force transfer device 13b is disposed in a rear portion of the power unit 13.

The road-surface-detection device 100 detects the type of a road surface. The road-surface-detection device 100 is attached to a front portion of the vehicle body 2. The road-surface-detection device 100 includes *inter alia*, and as defined with independent claim 1, a light source 80, detectors 81 and 82, a road surface determiner 70, and an illumination control circuit 75. A detailed configuration of the road-surface-detection device 100 will be described later.

In this embodiment, since the vehicle 1 is the motorcycle, the front wheel 3 is located ahead of the vehicle body 2. As described above, since the road-surface-detection device 100 is located in the front portion of the vehicle body 2, it is difficult to receive specular reflection light from a road surface 300 in the case of detecting the type of a road surface ahead of the vehicle. In view of this, in this embodiment, the road-surface-detection device 100 is configured to detect reflected light that is emitted from a light source 80, reflected on the road surface 300, and returning toward the light source 80 to thereby detect the type of the road surface.

The vehicle controller 120 controls driving of components of the vehicle 1 such as the power unit 13. The vehicle controller 120 causes an unillustrated output device to notify a driver of a detection result of the road-surface-detection device 100 in accordance with the detection result, by using an unillustrated output device.

### (Road Surface Detection Device)

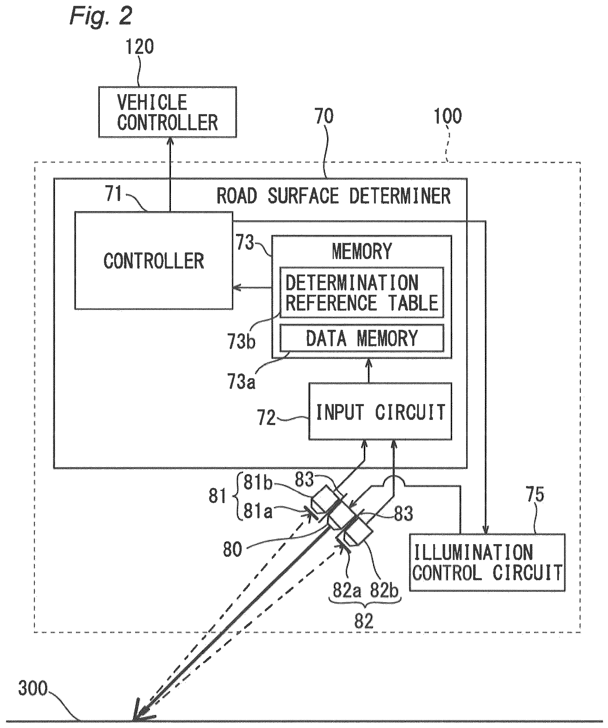

A detailed configuration of the road-surface-detection device 100 according to the first embodiment will now be described with reference to FIG. 2. FIG. 2 is a functional block diagram illustrating a schematic configuration of the road-surface-detection device 100.

The road-surface-detection device 100 includes the light source 80, the detectors 81 and 82, the road surface determiner 70, and the illumination control circuit 75.

The light source 80 is a light source of a headlight 8 supported by the vehicle front portion of the vehicle body 2. The headlight 8 includes the light source 80 and an unillustrated reflector.

The light source 80 emits light of a plurality of different wavelengths in a visible light wavelength range. The emitted light irradiates the road surface 300 ahead of the front wheel 3. The light source 80 is, for example, a halogen light, an HID light, or a white LED, and in this embodiment is a white LED.

The detectors 81 and 82 are disposed inside the headlight 8. The detectors 81 and 82 detect reflection intensities of reflected light in the plurality of different wavelengths in the visible light wavelength range in reflected light that is emitted from the light source 80 of the headlight 8, reflected on the road surface 300, and returning toward the light source 80. That is, the detectors 81 and 82 receive reflected light in the visible light to near-infrared light wavelength ranges.

The detectors 81 and 82 include filters 81a and 82a that allow specific wavelengths to pass therethrough, and light-receiving devices 81b and 82b.

The detectors 81 and 82 are disposed at positions deviated from the optical axis of the light source 80 such that light emitted from the light source 80 of the headlight 8 is not reflected on the unillustrated reflector to avoid direct entering of the light in the light-receiving devices 81b and 82b. A light shield plate 83 is disposed between the light source 80 and the light-receiving devices 81b and 82b in order to prevent light emitted from the light source 80 from directly entering the light-receiving devices 81b and 82b.

In a case where the visible light range is divided into three ranges of a short-wavelength range, a middle-wavelength range, and a long-wavelength range depending on a wavelength, the filter 81a allows light of a short wavelength in the visible light range to pass therethrough. The filter 81a of this embodiment mainly allows light of a blue wavelength range to pass therethrough.

The light-receiving device 81b detects light that has passed through the filter 81a, that is, reflected light in the blue wavelength range. The detection result of the light-receiving device 81b is input to the road surface determiner 70 using a reflection intensity of the reflected light as a voltage value.

In the case where the visible light range is divided into three ranges of the short-wavelength range, the middle-wavelength range, and the long-wavelength range depending on a wavelength, the filter 82a allows light of long to near-infrared wavelengths in the visible light range to pass therethrough. The filter 82a of this embodiment mainly allows light of a red wavelength range to pass therethrough.

The light-receiving device 82b detects light that has passed through the filter 82a, that is, reflected light in the red wavelength range. The detection result of the light-receiving device 82b is input to the road surface determiner 70 using a reflection intensity of the reflected light as a voltage value.

The road surface determiner 70 determines the type of the road surface 300 based on reflection intensities of reflected light as the detection results of the detectors 81 and 82. The road surface determiner 70 includes an input circuit 72, a memory 73, and a controller 71.

The input circuit 72 performs analog to digital conversion (A-to-D conversion) on the detection results output from the light-receiving devices 81b and 82b. Specifically, the input circuit 72 performs A-to-D conversion on the reflection intensity output from the light-receiving device 81b that detects reflected light in the blue wavelength range, and outputs the converted value of the reflection intensity to a data memory 73a of the memory 73. The input circuit 72 performs A-to-D conversion on the reflection intensity output from the light-receiving device 82b that detects reflected light in the red wavelength range, and inputs the converted value of the reflection intensity to the data memory 73a of the memory 73.

The memory 73 includes the data memory 73a and a determination reference table 73b. The data memory 73a stores a value detected by the light-receiving devices 81b and 82b and then converted to a digital value in the input circuit 72. That is, the data memory 73a stores a digital value of the reflection intensity of reflected light in the blue wavelength range and a digital value of the reflection intensity of reflected light in the red wavelength range.

The determination reference table 73b stores table data serving as determination references for reflection intensities of the reflected light in the red and blue wavelength ranges with respect to road surfaces. The determination reference table 73b stores table data in accordance with the type of road surface. Specifically, as described above, the light-receiving devices 81b and 82b output voltages corresponding to the received reflected light. The determination reference table 73b stores, as a first threshold voltage, each of voltage values corresponding to thresholds for reflection intensities of the reflected light in the blue and red wavelength ranges, for example. The determination reference table 73b also stores a second threshold voltage for distinguishing a wet state and a dry state of the road surface 300 with respect to the reflection intensity of red light.

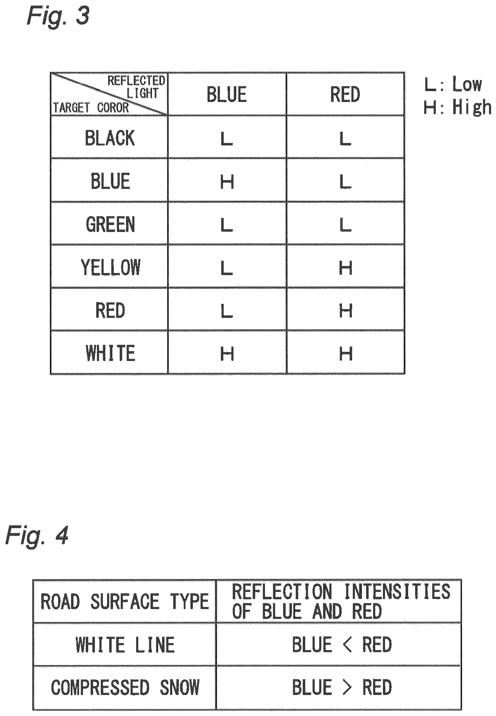

FIG. 3 is a table showing, as High (H) or Low (L), reflection intensities of reflected light in the red wavelength range and reflected light in the blue wavelength range in reflected light reflected on a target surface in a case where light is applied to a target surface of each color.

In determination on the type of a road surface using reflection intensities of reflected light as shown in FIG. 3, it may be determined that the color of a road surface provided with a white line or in a compacted snow state is white. Thus, inventors of the present teaching have studied the reflection intensity of reflected light in the red wavelength range and the reflection intensity of reflected light in the blue wavelength range in reflected light reflected on a road surface provided with a white line and a road surface in a compressed snow state. Specifically, a result of comparison between the reflection intensity of reflected light in the red wavelength range and the reflection intensity of reflected light in the blue wavelength range shows that the reflection intensity of the reflected light in the blue wavelength range on a road surface with a white line is smaller than the reflection intensity of the reflected light in the red wavelength range, and that the reflection intensity of the reflected light in the blue wavelength range in a road surface in a compacted snow state is larger than the reflection intensity of the reflected light in the red wavelength range. Thus, as shown in FIG. 4, the inventors found that it is possible to determine whether a road surface is a road surface with a white line or a road surface in a compacted snow state by using a relationship between the reflection intensity of reflected light in the red wavelength range and the reflection intensity of reflected light in the blue wavelength range.

FIG. 4 is a table showing relationships between the type of a road surface and reflection intensities of reflected light in the red wavelength range and reflected light in the blue wavelength range in reflected light reflected on road surfaces in a case where light is applied to a road surface with a white line and a road surface in a compacted snow state.

As shown in FIG. 4, in a case where the reflection intensity of reflected light in the blue wavelength range is smaller than the wavelength of reflected light in the red wavelength range (blue < red), the road surface is a road surface with a white line. On the other hand, in a case where the reflection intensity of reflected light in the blue wavelength range is larger than the wavelength of reflected light in the red wavelength range (blue > red), the road surface is a road surface with a compacted snow state.

The controller 71 compares each of the reflection intensity of reflected light in the blue wavelength range and the reflection intensity of reflected light in the red wavelength range stored in the data memory 73a of the memory 73, with a threshold voltage (threshold) stored in the determination reference table 73b. In each wavelength range, the controller 71 defines a case where a voltage value corresponding to the reflection intensity is greater than or equal to the first threshold voltage is High (H) and a case where a voltage value corresponding to the reflection intensity is lower than the first threshold voltage as Low (L). By using these determination results, the controller 71 specifies a color of the road surface 300 from the table of FIG. 3 and determines a type of the road surface.

As shown in FIG. 3, in a case where the color of the road surface is white, the reflection intensity of reflected light in the blue wavelength range and the reflection intensity of reflected light in the red wavelength range are High (H). Thus, in a case where the color of the road surface is determined to be white, the controller 71 compares the reflection intensity of reflected light in the blue wavelength range and the reflection intensity of reflected light in the red wavelength range, and based on the comparison results determines whether the road surface is a road surface with a white line or a road surface in a compacted snow state, from the table of FIG. 4.

In addition, in accordance with the determined type of the road surface 300, the controller 71 reads the second threshold voltage for distinguishing the wet state and the dry state of the road surface from the determination reference table 73b, and compares the second threshold voltage with a voltage value corresponding to the reflection intensity of reflected light in the red wavelength range. If the voltage value corresponding to the reflection intensity is greater than or equal to the second threshold voltage, the controller 71 determines that the road surface 300 is in a wet state. That is, the controller 71 determines whether the road surface is in the wet state or the dry state, based on the comparison result between the voltage value corresponding to the reflection intensity and the second threshold voltage. In a case where the road surface is frozen, the quantity of specular reflection of reflected light increases, and substantially no reflected light returns to the light source. Accordingly, if substantially no red reflected light is detected, the controller 71 determines that the road surface is frozen.

The controller 71 outputs a determination result on the type of the road surface 300, to the vehicle controller 120.

The illumination control circuit 75 performs illumination control on the light source 80. Specifically, the illumination control circuit 75 controls illumination of the light source 80 by controlling pulse driving of a white LED. By the pulse driving of the white LED, the illumination control circuit 75 prevents extraneous light from affecting reflected light input to the detectors 81 and 82.

If the road surface determiner 70 determines that the road surface 300 is of a type that needs caution when driving, the vehicle controller 120 causes an unillustrated output device to issue an alarm or a notification that calls attention to a driver. The output device notifies the driver of, for example, "Take caution to wet road surface." by voice.

### (Operation of Road Surface Detection Device)

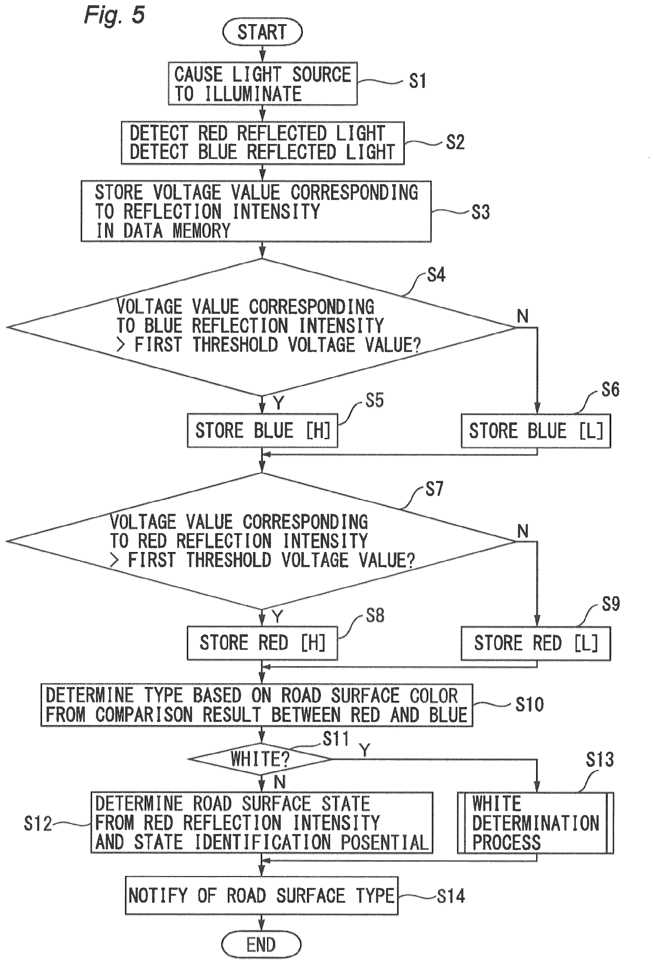

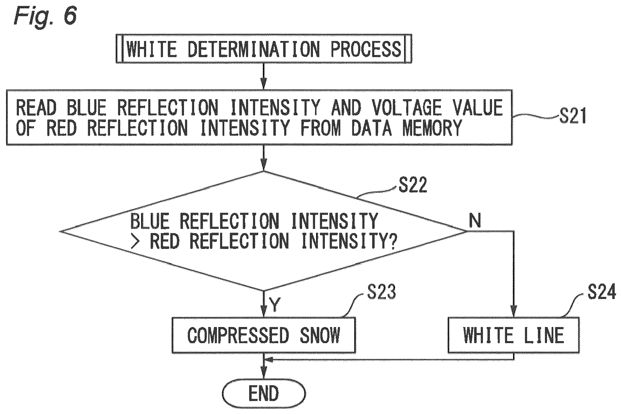

An example of operation of the road-surface-detection device 100 will now be described with reference to flowcharts of FIGS. 5 and 6.

When the road-surface-detection device 100 starts operation (start), the controller 71 indicates the illumination control circuit 75 to cause the light source 80 constituted by the white LED to illuminate in step S1. The illumination control circuit 75 performs illumination control on the light source 80 by pulse driving control.

Then, in step S2, the detectors 81 and 82 detect reflected light reflected on the road surface 300 and returning to the light source 80. In the detector 81, the light-receiving device 81b detects the reflection intensity of reflected light in the blue wavelength range as a voltage value. The light-receiving device 82b of the detector 82 detects reflected light in the red wavelength range as a voltage value.

Subsequently, in step S3, the voltage value corresponding to the reflection intensity of reflected light in the blue wavelength range detected by the light-receiving device 81b and the voltage value corresponding to the reflection intensity of reflected light in the red wavelength range detected by the light-receiving device 82b are subjected to digital conversion by the input circuit 72. The voltage values subjected to the digital conversion are stored in the data memory 73a of the memory 73.

Thereafter, in step S4, the controller 71 compares the voltage value corresponding to the reflection intensity of reflected light in the blue wavelength range detected by the light-receiving device 81b with the first threshold voltage of reflected light in the blue wavelength range stored in the determination reference table 73b. If the voltage value is determined to be higher than the first threshold voltage (YES in step S4), the controller 71 determines that the reflection intensity of reflected light in the blue wavelength range detected by the light-receiving device 81b is High, and the process proceeds to step S5, and [H] as a determination result is stored in the data memory 73a.

On the other hand, if the voltage value is determined to be less than or equal to the first threshold voltage (NO in step S4), the controller 71 determines that the reflection intensity of reflected light in the blue wavelength range detected by the light-receiving device 81b is Low, and the process proceeds to step S6, and [L] as a determination result is stored in the data memory 73a.

In step S7 subsequent to steps S5 and S6, the controller 71 compares the voltage value corresponding to the reflection intensity of reflected light in the red wavelength range with the first threshold voltage of reflected light in the red wavelength range stored in the determination reference table 73b. If the voltage value is determined to be higher than the first threshold voltage (YES in step S7), the controller 71 determines that the reflection intensity of reflected light in the red wavelength range detected by the light-receiving device 82b is High, and the process proceeds to step S8, and [H] as a determination result is stored in the data memory 73a.

On the other hand, the voltage value is determined to be less than or equal to the first threshold voltage (NO in step S7), the controller 71 determines that the reflection intensity of reflected light in the red wavelength range detected by the light-receiving device 82b is Low, and the process proceeds to step S9, and [L] as a determination result is stored in the data memory 73a.

In next step S10, the controller 71 determines a color of the road surface 300 from the combination of the determination result of the red wavelength range and the determination result of the blue wavelength range stored in the data memory 73a, and determines a type of the road surface corresponding to the color of the road surface 300.

Thereafter, in step S11, the controller 71 determines whether the color of the road surface 300 is white or not. If the controller 71 determines that the color of the road surface 300 is not white (NO in step S11), the process proceeds to step S12. If the controller 71 determines that the color of the road surface 300 is white (YES in step S11), the process proceeds to step S13. Then, the controller 71 performs a white determination process to thereby determine whether the road surface 300 is a road surface with a white line or a road surface in a compacted snow state. This white determination process will be described later.

Subsequently, in step S12, the controller 71 reads, from the determination reference table 73b, the second threshold voltage for distinguishing a wet state and a dry state of the road surface and, based on the reflection intensity of reflection light in the red wavelength range, determines which one of the dry, wet, or frozen state the road surface 300 is in. In step S14, the controller 71 then notifies the vehicle controller 120 of the determination result of the type of the road surface 300, and finishes the operation (end).

The light source 80 of the headlight 8 emits light including light in the visible light to near-infrared light wavelength ranges, to the road surface 300. Accordingly, the detectors 81 and 82 detect reflected light in the blue wavelength range and reflected light in the red wavelength range in the reflected light in the visible light to near-infrared light wavelength ranges returning from the road surface 300 toward the light source.

In a case where the color of the road surface is close to the color of the wavelength of the light source of visible light, the reflection intensity of the reflected light is high, whereas in a case where the color of the road surface is different from the color of the wavelength of the light source of visible light, the reflection intensity of the reflected light is low. Thus, based on the detection results of the detectors 81 and 82 that detect reflected light in the blue wavelength range and reflected light in the red wavelength range, the road surface determiner 70 can determine the type of a road surface depending on the color of the road surface. Accordingly, the detectors 81 and 82 detect reflected light of a wavelength different from those of reflected light in the blue wavelength range and reflected light in the red wavelength range so that the road surface determiner 70 can detect the type of the road surface based on the reflection intensities of the wavelengths.

With respect to reflected light from the long-wavelength range to the near-infrared wavelength range in the visible light range, the reflection intensity of reflected light on a road surface in a dry state is higher than the reflection intensity of reflected light on a road surface in a wet state. The difference in reflection intensity of reflected light from the long-wavelength range to the near-infrared wavelength range in the visible light range between the road surface in the dry state and the road surface in the wet state is higher than that of reflected light in the short-wavelength range or the middle-wavelength range in the visible light range. Accordingly, by detecting reflected light in the red wavelength range, a road surface in a dry state and a road surface in a wet state can be easily detected.

The white determination process will be described with reference to FIG. 6. In step S11, if the controller 71 determines that the color of the road surface 300 is white, the controller 71 performs a white determination process (step S13). When the controller 71 starts the white determination process, the controller 71 reads a voltage value corresponding to the reflection intensity of reflected light in the blue wavelength range and a voltage value corresponding to the reflection intensity of reflected light in the red wavelength range stored in the data memory 73a in step S21.

Subsequently, in step S22, the controller 71 compares the reflection intensity of reflected light in the blue wavelength range and the reflection intensity of reflected light in the red wavelength range. That is, the controller 71 compares a voltage value corresponding to the reflection intensity of reflected light in the blue wavelength range and a voltage value corresponding to the reflection intensity of reflected light in the red wavelength range that have been read from the data memory 73a. If the controller 71 determines that the voltage value corresponding to the reflection intensity of reflected light in the blue wavelength range is larger than the voltage value corresponding to the reflection intensity of reflected light in the red wavelength range (YES in step S22), the process proceeds to step S23. Then, the controller 71 determines that the road surface 300 is a road surface in a compacted snow state, and finishes the white determination process.

On the other hand, if the controller 71 determines that the voltage value corresponding to the reflection intensity of reflected light in the blue wavelength range is smaller than the voltage value corresponding to the reflection intensity of reflected light in the red wavelength range (NO in step S22), the process proceeds to step S24. Then, the controller 71 determines that the road surface is a road surface with a white line, and finishes the white determination process.

As described above, in the case where the road surface 300 is provided with a white line, the reflection intensity of reflected light in the blue wavelength range is lower than the reflection intensity of reflected light in the red wavelength range, whereas in the case where the road surface 300 is in a compacted snow state, the reflection intensity of reflected light in the blue wavelength range is higher than the reflection intensity of reflected light in the red wavelength range. As described above, the controller 71 compares the reflection intensity of reflected light in the blue wavelength range and the reflection intensity of reflected light in the red wavelength range to thereby determine whether the road surface 300 is the road surface 300 with the white line or the road surface 300 in the compacted snow state.

In the first embodiment described above, the road-surface-detection device 100 can utilize the light source 80 of the headlight 8 as a light source for the road-surface-detection device 100 without preparing an additional light source. In addition, the detectors 81 and 82 are disposed inside the headlight 8 so that the road-surface-detection device 100 can be mounted on the vehicle 1 without a change in vehicle appearance.

### (Inspection Test)

An inspection test for inspecting the configuration of the embodiment described above will now be described. The inspection test confirms that the type of a road surface can be distinguished by using reflected light obtained by reflection, on the road surface, of light of different wavelengths in at least the visible light range.

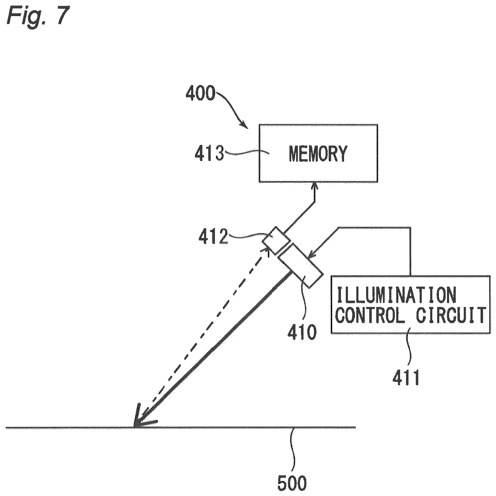

FIG. 7 illustrates a schematic configuration of a verification device 400 used in the inspection test. FIG. 7 is a functional block diagram illustrating a schematic configuration of the verification device 400. In this inspection test, light was emitted from a light source 410 of the verification device 400 toward a verification road surface 500, and reflected light reflected on the verification road surface 500 and returning toward the light source 410 was detected by a light-receiving device 412.

Specifically, the verification device 400 includes the light source 410, a light-receiving device 412, an illumination control circuit 411, and a memory 413. The light source 410 is a white LED, and applies light onto the verification road surface 500 at 45°. The light-receiving device 412 detects reflected light in all the wavelength ranges reflected on the verification road surface 500 and returning toward the light source 410. The illumination control circuit 411 controls illumination of the light source 410. The memory 413 stores reflection intensities of reflected light detected by the light-receiving device 412.

Examples of the verification road surface 500 for which reflection intensities of reflected light were measured by the verification device 400 include wet asphalt, puddles on asphalt, manholes, iron plates, dry asphalt, colored asphalt (red-colored asphalt, yellow-colored asphalt, and blue-colored asphalt), gratings (gutter lids), sand, gravel, concrete (dried), yellow lines on road surfaces, and white lines on road surfaces.

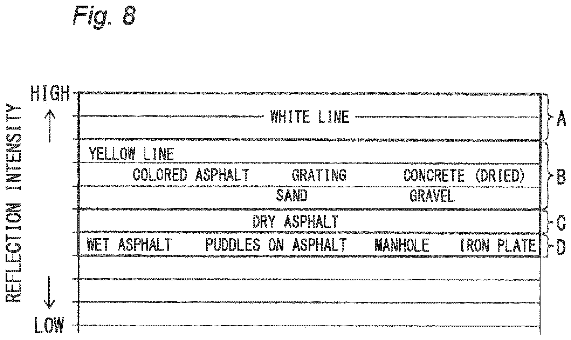

FIG. 8 shows a measurement result of reflection intensities of the reflected light on the road surfaces. As shown in FIG. 8, the types of the road surfaces can be classified into four groups depending on the reflection intensity of reflected light. That is, the types of the road surfaces can be classified into a group A including white lines, a group B including yellow lines, colored asphalt, and dried concrete, a group C including dried asphalt, and group D including wet asphalt, puddles on asphalt, manholes, and iron plates, in descending order of reflection intensity. However, it was confirmed that the road surfaces classified as the same group, such as puddles on asphalt and manholes, cannot be distinguished from each other.

In addition, it was also confirmed that in the case of a light source of visible light, the reflection intensities of reflected light on road surfaces whose colors are close to the color of wavelength of visible light is high, whereas the reflection intensities of reflected light on road surfaces having the other colors are low. In view of this, the inventors of the present teaching modified the verification device 400 illustrated in FIG. 7 in the manner described below and inspected the reflection intensity of reflected light in the blue wavelength range and the reflection intensity of reflected light in the red wavelength range. A verification device having the following configuration is mounted on a vehicle for a verification test.

In the device illustrated in FIG. 7, the inventors used, instead of the light source 410, a light source including a red LED that emits red light of a wavelength of 633 nm and a blue LED that emits blue light of a wavelength of 463 nm, and also used, instead of the illumination control circuit 411, an illumination control circuit capable of controlling driving of the red LED and the blue LED independently of each other. That is, the illumination control circuit causes the blue LED or the red LED in the light sources to emit light, and the light-receiving device detects reflected light reflected on the verification road surface 500.

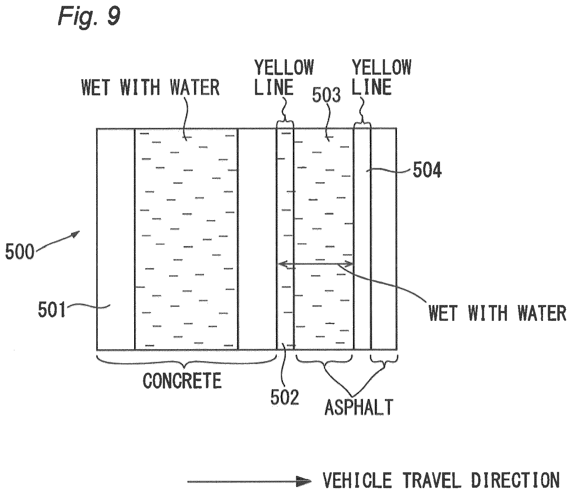

As illustrated in FIG. 9, the verification road surface 500 for which the reflection intensities are verified includes a concrete road surface 501, a road surface 502 on which a yellow line is painted, an asphalt road surface 503, and a road surface 504 on which a yellow line is painted, each of which extends in the direction in which the vehicle travels (see solid lines in FIG. 9). A road surface in a wet state was formed by locally pouring water on each of the concrete road surface 501 and the asphalt road surface 503. Water was also poured on the road surface 502 with the yellow line located between the concrete road surface 501 and the asphalt road surface 503 such that the road surface 502 was in a wet state. The road surface on which a yellow line is painted will be hereinafter referred to as a yellow-line painted road surface, the yellow-line painted road surface in a dry state will be hereinafter referred to as a dry yellow-line painted road surface, and the yellow-line painted road surface in a wet state will be hereinafter referred to as a wet yellow-line painted road surface.

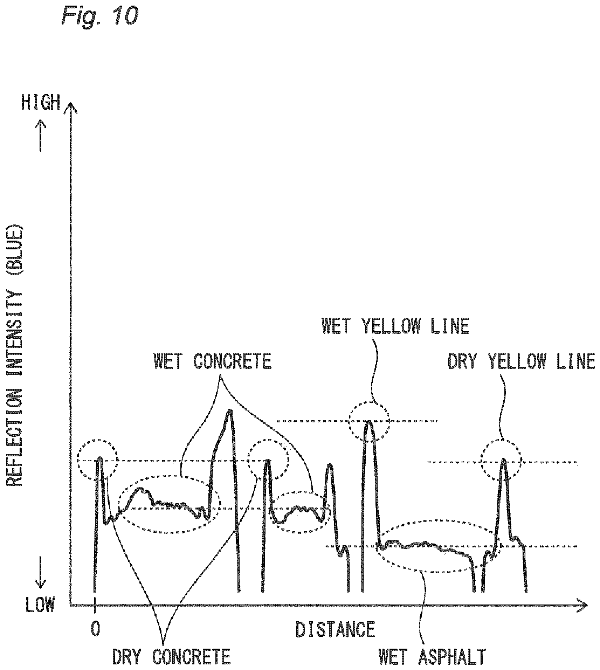

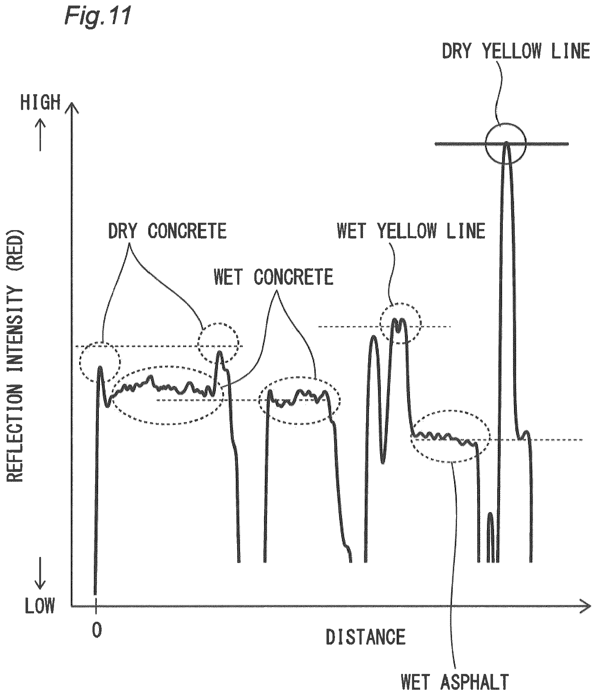

The verification device having the configuration described above and mounted on the vehicle was moved on the verification road surface 500. The light-receiving device of the verification device detected reflected light reflected on the verification road surface 500. FIG. 10 is a graph showing reflection intensities of road surfaces when the blue LED emits light. FIG. 11 is a graph showing reflection intensities of road surfaces when the red LED emits light.

As shown in FIGS. 10 and 11, in a case where light from the light source is light emitted from the red LED, the reflection intensity of reflected light reflected on the dry concrete road surface and the reflection intensity of reflected light reflected on the dry yellow-line painted road surface were distinguished from each other. That is, as discussed above, with the configuration described above, it is possible to distinguish the dry concrete road surface and the dry yellow-line painted road surface classified in the same group B in a case where white light is emitted. FIGS. 10 and 11 show that even on the road surfaces of the same type, the reflection intensity of reflected light when light emitted from a blue LED is reflected on the road surface and the reflection intensity of reflected light when light emitted from a red LED is reflected on the road surface are different. Thus, from this verification result, it was confirmed that the road-surface-detection device 100 of this embodiment is capable of distinguishing types of road surfaces.

In the case of light emitted from the red LED, the reflection intensity of reflected light reflected on the dry yellow-line painted road surface is higher than the reflection intensity of reflected light reflected on the wet yellow-line painted road surface. This is because a light absorptance of red light by water is high, and thus, the reflection intensity of reflected light reflected on a road surface in a wet state containing moisture is lower than the reflection intensity of reflected light reflected on a road surface in a dry state.

This verification result shows that the road-surface-detection device 100 of this embodiment includes blue light and red light as light sources and is capable of determining the type of a road surface by detecting reflected light reflected on the road surface and returning to the light sources. The verification result also shows that the road-surface-detection device 100 easily detects a dry state and a wet state of a road surface by detecting reflected light of red light. In the manner described above, the road-surface-detection device 100 of this embodiment detects reflection intensities of reflected light when light in different wavelength ranges are reflected on a road surface so that the type and state of the road surface can be detected with classification.

### (Second Embodiment)

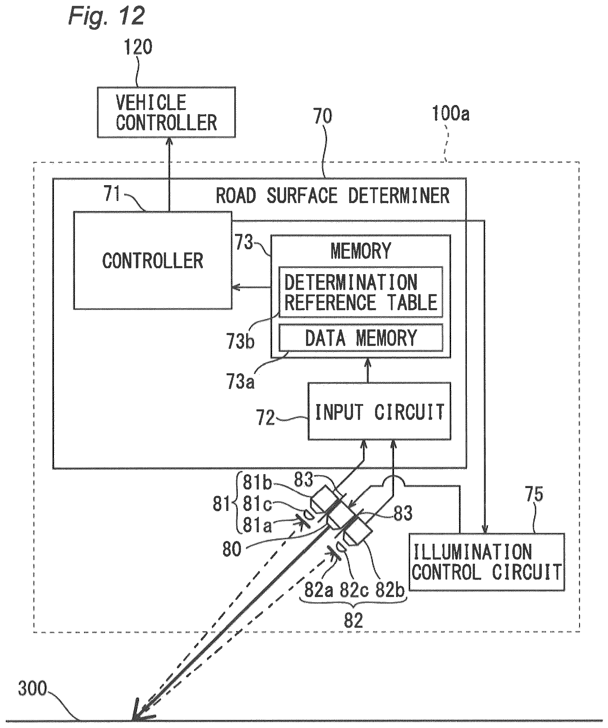

A configuration of a road-surface-detection device 100a according to a second embodiment of the present teaching will now be described with reference to FIG. 12. The road-surface-detection device 100a according to the second embodiment is different from the road-surface-detection device 100 of the first embodiment in that the detectors 81 and 82 include condenser lenses 81c and 82c. In the road-surface-detection device 100a, parts that are identical or similar to those of the road-surface-detection device 100 of the first embodiment are denoted by identical reference numerals, and description of these parts may be omitted.

As illustrated in FIG. 12, the detector 81 includes a condenser lens 81c between a filter 81a and a light-receiving device 81b. Similarly, the detector 82 includes a condenser lens 82c between a filter 82a and a light-receiving device 82b.

The condenser lenses 81c and 82c collect reflected light obtained in an area of a road surface 300 having a width of about 60 cm, and input the collected light to the light-receiving devices 81b and 82b. In the case of detecting the type of a road surface ahead of a vehicle 1, the light-receiving devices 81b and 82b receive reflected light obtained in an area of the road surface 300 having a width of about 60 cm so that the type of the road surface ahead of the vehicle 1 can be accurately distinguished.

The condenser lenses 81c and 82c do not need to be disposed between the filters and the light-receiving devices, and may be disposed along the road surface direction of the filters 81a and 82a. The filters 81a and 82a may be disposed on the surfaces of the condenser lenses 81c and 82c, respectively. The light-receiving device, the condenser lens, and the filter may be formed as one unit.

### (Third Embodiment)

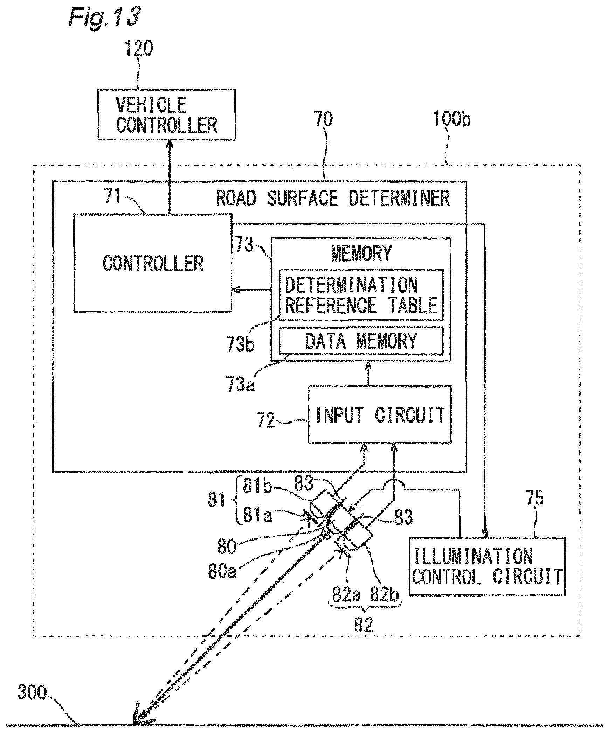

A configuration of a road-surface-detection device 100b according to a third embodiment of the present teaching will now be described with reference to FIG. 13. The road-surface-detection device 100b according to the third embodiment is different from the road-surface-detection device 100 of the first embodiment in that it includes a condenser lens 80a ahead of the light source 80 in a light emission direction. In the road-surface-detection device 100b, parts that are identical or similar to those of the road-surface-detection device 100 of the first embodiment are denoted by identical reference numerals, and description of these parts may be omitted.

The condenser lens 80a focuses light emitted from the light source 80 onto a road surface 300 such that an area of the road surface having a width of about 60 cm is irradiated. In the case of detecting the type of a road surface ahead of a vehicle 1, light is applied to an area of the road surface 300 having a width of about 60 cm so that the type of the road surface ahead of the vehicle 1 can be accurately distinguished.

### The condenser lens 80a and the light source 80 may be formed as one unit.

### (Fourth Embodiment)

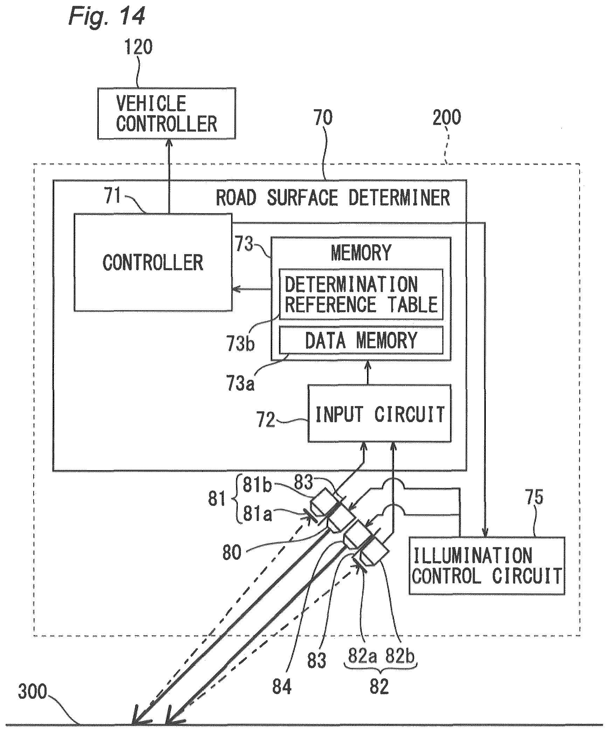

A configuration of a road-surface-detection device 200 according to a fourth embodiment of the present teaching will now be described with reference to FIG. 14. The road-surface-detection device 200 according to the fourth embodiment is different from the road-surface-detection device 100 of the first embodiment in that it includes an auxiliary light source 84. In the road-surface-detection device 200 parts that are identical or similar to those of the road-surface-detection device 100 of the first embodiment are denoted by identical reference numerals, and description of these parts may be omitted.

The road-surface-detection device 200 includes, inside a headlight 8, the auxiliary light source 84 that outputs light in a near-infrared wavelength range.

In a manner similar to the road-surface-detection device 100 of the first embodiment, the road-surface-detection device 200 determines the state of a road surface 300 by using a phenomenon that the reflection intensity varies depending on whether moisture is present on the road surface 300 or not. That is, a controller 71 of the road-surface-detection device 200 compares a reflection intensity detected by a detector 82 with a second threshold voltage stored in a determination reference table 73b and determines a state of the road surface 300. Light in red to near-infrared wavelength ranges is readily absorbed by moisture. A white LED of a light source 80 emits light in the near-infrared wavelength range, and this light has a low intensity. On the other hand, since the road-surface-detection device 200 includes the auxiliary light source 84 that outputs light in the near-infrared wavelength range as described above, the reflection intensity of reflected light in the near-infrared wavelength range in reflected light reflected on the road surface 300 on which moisture is present can be further increased.

The detector 82 of the road-surface-detection device 200 detects reflected light emitted from the light source 80 and the auxiliary light source 84 and reflected on the road surface 300. A filter 82a of the detector 82 allows light in the red to near-infrared wavelength ranges to pass therethrough. A light-receiving device 82b of the detector 82 detects the reflection intensity of reflected light in the red to near-infrared wavelength ranges that has passed through the filter 82a.

With the configuration of this embodiment, the road-surface-detection device 200 is capable of increasing the intensities of reflected light in the red to near-infrared wavelength ranges that is readily absorbed by moisture on the road surface 300. Thus, the road-surface-detection device 200 is capable of performing accurate determination on a moisture amount on the road surface 300, that is, a dry state and a wet state of the road surface 300.

### (Other Embodiments)

The embodiments of the present teaching have been described above, but the embodiments are merely examples for carrying out the present teaching. Thus, the invention is not limited to the embodiments, and the embodiments may be modified as necessary within the scope of the appended claims.

In the embodiments described above, in the case where the visible light range is divided into the three ranges of the short-wavelength range, the middle-wavelength range, and the long-wavelength range depending on the wavelength, the detectors 81 and 82 detect reflected light in the short-wavelength range and reflected light in the long-wavelength range to the near-infrared wavelength range. Alternatively, the detectors 81 and 82 may be configured to detect reflected light in the middle-wavelength range and reflected light in the long-wavelength range to the near-infrared wavelength range.

In the case where the visible light range is divided into the three ranges of the short-wavelength range, the middle-wavelength range, and the long-wavelength range depending on the wavelength, the detectors 81 and 82 may be configured to detect reflected light in at least two of the short-wavelength range, the middle-wavelength range, and the long-wavelength range.

In the embodiments described above, in the case where the visible light range is divided into the three ranges of the short-wavelength range, the middle-wavelength range, and the long-wavelength range depending on the wavelength, the detectors 81 and 82 detect reflected light in different wavelength ranges, but may detect a plurality of types of reflected light of different wavelengths in the same wavelength range. In this case, the plurality of types of reflected light of different wavelengths are preferably a plurality of types of light showing a wavelength difference of 100 nm or more.

In the embodiments described above, in the case where the visible light range is divided into the three ranges of the short-wavelength range, the middle-wavelength range, and the long-wavelength range depending on the wavelength, the detectors 81 and 82 detect reflected light in the short-wavelength range and reflected light in the long-wavelength range to the near-infrared wavelength range. Alternatively, the detectors may detect reflected light in the middle-wavelength range, in addition to the reflected light in the two wavelength ranges, to thereby detect reflected light in three wavelength ranges. By increasing the number of wavelength ranges of reflected light to be detected, the type of a road surface can be determined in more detail.

In the embodiments described above, the road-surface-detection device 100 detects reflected light in a plurality of wavelength ranges at the same time. In an example outside the scope of present invention, the road-surface-detection device may be configured to use one light-receiving device and a plurality of filters and detect reflected light in a plurality of wavelength ranges in time division by changing the filters.

In the embodiments described above, the road-surface-detection device 100 uses the light source 80 of the headlight 8 as a light source and includes the detectors 81 and 82 inside the headlight 8. Alternatively, the road-surface-detection device may include a light source separately from the headlight such that reflected light obtained by light emitted from this light source and reflected on a road surface can be detected by the detectors.

In the road-surface-detection device, the detectors may detect not reflected light returning toward the light source but specular reflection light. In a vehicle including a vehicle base and a bumper ahead of wheels, such as a four-wheel vehicle, the road-surface-detection device may be disposed at a position on the vehicle base facing the road surface or a position on the bumper facing the road surface. The road-surface-detection device disposed at such a location may detect any of specular reflection light or reflected light returning toward the light source.

In the embodiments described above, the controller 71 compares a voltage corresponding to the reflection intensity of reflected light detected by the detector with a threshold voltage stored in the determination reference table. Alternatively, the controller 71 may use a current or a luminance, for example, as a value corresponding to the reflection intensity. In this case, it is sufficient that a corresponding reference value is stored in the determination reference table.

### INDUSTRIAL APPLICABILITY

A road-surface-detection device according to the present teaching is suitable for a device for detecting the type of a road surface.

### DESCRIPTION OF REFERENCE CHARACTERS

1: vehicle
2: vehicle body
3: front wheel
4: rear wheel
5: vehicle body cover
7: seat
8: headlight
11: vehicle body frame
12: handlebar
13: power unit
13a: engine
70: road surface determiner
71: controller
72: input circuit
73: memory
73a: data memory
73b: determination reference table
75: illumination control circuit
80: light source
81, 82: detector
81a, 82a: filter
81b, 82b: light-receiving device
83: light shield plate
84: auxiliary light source
100, 100a, 100b, 200: road-surface-detection device
300: road surface
500: verification road surface

## Claims

1. A road-surface-detection device (100, 100a, 100b, 200) mountable on a vehicle (1), the road-surface-detection device (100, 100a, 100b, 200) comprising:
a light source (80) configured to emit, to a road surface (300), light of a plurality of different wavelengths in a visible light wavelength range;
a first and a second detector (81, 82), wherein, with the visible light wavelength range being divided into three ranges of a short-wavelength range, a middle-wavelength range, and a long-wavelength range depending on a wavelength, the first detector includes a first filter (81a) configured to pass light of the short-wavelength range or the middle-wavelength range, and the second detector includes a second filter (82a) configured to pass light from the long wavelength range to a near-infrared wavelength range, and wherein each detector further comprises a corresponding light-receiving device (81b, 82b), the detectors being configured to detect reflection intensities of reflected light having the plurality of different wavelengths, the reflected light being light emitted from the light source (80) and reflected on the road surface (300); and
a road surface determiner (70) configured to determine a type of the road surface (300), based on the reflection intensities of the reflected light having the plurality of different wavelengths and detected by the detectors (81, 82),
**characterized in that**
the road surface determiner (70) is configured to perform a comparison on each of the reflection intensities of the reflected light having the plurality of wavelengths and detected by the detectors (81, 82) with a respective threshold, wherein the road surface determiner (70) is further configured to determine a type of the road surface (300) based on the comparison.

2. The road-surface-detection device (100, 100a, 100b, 200) according to claim 1, wherein
the light source (80) is configured to emit light to a road surface (300) ahead of a wheel (3) of the vehicle (1), and
the detectors (81,82) are configured to detect reflection intensities of reflected light emitted from the light source (80), reflected on the road surface (300), and returning toward the light source (80).

3. The road-surface-detection device (100, 100a, 100b, 200) according to claim 1, comprising a headlight (8), wherein the
headlight (8) includes the light source (80) configured to irradiate a road surface (300) ahead of a wheel (3) of the vehicle (1); and
the detectors (81,82) are disposed inside the headlight (8), each of the detectors (81, 82) being configured to detect reflected light of the plurality of wavelengths including at least one type of visible light, the reflected light emitted from the light source (80), reflected on the road surface (300), and returning toward the light source (80).

4. The road-surface-detection device (100, 100a, 100b, 200) according to any one of claims 1 to 3, wherein the light source (80) is a white light source.

5. The road-surface-detection device (100, 100a, 100b, 200) according to any one of claims 1 to 4, wherein the light source (80) includes an LED light source.

6. The road-surface-detection device (100, 100a, 100b, 200) according to claim 5, wherein the light source (80) includes an auxiliary light source (84) configured to emit light in a near-infrared wavelength range.

7. A vehicle (1) including the road-surface-detection device (100, 100a, 100b, 200) according to any one of claims 1 to 6.

## Patentansprüche

1. Eine Straßenoberflächendetektionsvorrichtung (100, 100a, 100b, 200), die an einem Fahrzeug (1) montierbar ist, wobei die Straßenoberflächendetektionsvorrichtung (100, 100a, 100b, 200) folgende Merkmale aufweist:
eine Lichtquelle (80), die dazu konfiguriert ist, Licht einer Mehrzahl von unterschiedlichen Wellenlängen in einem Sichtbares-Licht-Wellenlängenbereich auf eine Straßenoberfläche (300) zu emittieren;
einen ersten und einen zweiten Detektor (81, 82), wobei, mit Unterteilung des Sichtbares-Licht-Wellenlängenbereiches in Abhängigkeit von einer Wellenlänge in drei Bereiche eines Bereiches mit kurzer Wellenlänge, eines Bereiches mit mittlerer Wellenlänge und eines Bereiches mit großer Wellenlänge, der erste Detektor ein erstes Filter (81a) umfasst, das dazu konfiguriert ist, Licht des Bereichs mit kurzer Wellenlänge oder des Bereichs mit mittlerer Wellenlänge durchzulassen, und der zweite Detektor ein zweites Filter (82a) umfasst, das dazu konfiguriert ist, Licht aus dem Bereich mit großer Wellenlänge bis zu einem Nahinfrarotwellenbereich durchzulassen, wobei jeder Detektor ferner eine entsprechende Lichtempfangsvorrichtung (81b, 82b) aufweist, wobei die Detektoren dazu konfiguriert sind, Reflexionsintensitäten von reflektiertem Licht mit der Mehrzahl von unterschiedlichen Wellenlängen zu detektieren, wobei es sich bei dem reflektierten Licht um Licht handelt, das von der Lichtquelle (80) emittiert und auf der Straßenoberfläche (300) reflektiert wird; und
einen Straßenoberflächenbestimmer (70), der dazu konfiguriert ist, einen Typ der Straßenoberfläche (300) zu bestimmen, basierend auf den Reflexionsintensitäten des reflektierten Lichts, das die Mehrzahl der unterschiedlichen Wellenlängen aufweist und von den Detektoren (81, 82) detektiert wird,
**dadurch gekennzeichnet, dass** der Straßenoberflächenbestimmer (70) dazu konfiguriert ist, einen Vergleich jeder der Reflexionsintensitäten des reflektierten Lichts, das die Mehrzahl von Wellenlängen aufweist und von den Detektoren (81, 82) detektiert wird, und einem jeweiligen Schwellenwert durchzuführen, wobei der Straßenoberflächenbestimmer (70) ferner dazu konfiguriert ist, einen Typ der Straßenoberfläche (300) basierend auf dem Vergleich zu bestimmen.

2. Die Straßenoberflächendetektionsvorrichtung (100, 100a, 100b, 200) gemäß Anspruch 1, wobei
die Lichtquelle (80) dazu konfiguriert ist, Licht auf eine Straßenoberfläche (300) vor einem Rad (3) des Fahrzeugs (1) zu emittieren, und
die Detektoren (81, 82) dazu konfiguriert sind, Reflexionsintensitäten des reflektierten Lichts zu detektieren, das von der Lichtquelle (80) emittiert wird, auf der Straßenoberfläche (300) reflektiert wird und hin zu der Lichtquelle (80) zurückkehrt.

3. Die Straßenoberflächendetektionsvorrichtung (100, 100a, 100b, 200) gemäß Anspruch 1, die einen Scheinwerfer (8) aufweist, wobei der Scheinwerfer (8) die Lichtquelle (80) umfasst, die dazu konfiguriert ist, einen Straßenoberfläche (300) vor einem Rad (3) des Fahrzeugs (1) anzustrahlen; und
die Detektoren (81, 82) innerhalb des Scheinwerfers (8) angeordnet sind, wobei jeder der Detektoren (81, 82) dazu konfiguriert ist, reflektiertes Licht der Mehrzahl von Wellenlängen, die zumindest einen Typ von sichtbarem Licht umfassen, zu detektieren, wobei das reflektierte Licht von der Lichtquelle (80) emittiert wird, auf der Straßenoberfläche (300) reflektiert wird und hin zu der Lichtquelle (80) zurückkehrt.

4. Die Straßenoberflächendetektionsvorrichtung (100, 100a, 100b, 200) gemäß einem der Ansprüche 1 bis 3, wobei die Lichtquelle (80) eine Weißlichtquelle ist.

5. Die Straßenoberflächendetektionsvorrichtung (100, 100a, 100b, 200) gemäß einem der Ansprüche 1 bis 4, wobei die Lichtquelle (80) eine LED-Lichtquelle umfasst.

6. Die Straßenoberflächendetektionsvorrichtung (100, 100a, 100b, 200) gemäß Anspruch 5, wobei die Lichtquelle (80) eine Hilfslichtquelle (84) umfasst, die dazu konfiguriert ist, Licht in einem Nahinfrarotwellenlängenbereich zu emittieren.

7. Ein Fahrzeug (1), das die Straßenoberflächendetektionsvorrichtung (100, 100a, 100b, 200) gemäß einem der Ansprüche 1 bis 6 umfasst.

## Revendications

1. Dispositif de détection de surface de route (100, 100a, 100b, 200) pouvant être monté sur un véhicule (1), le dispositif de détection de surface de route (100, 100a, 100b, 200) comprenant:
une source de lumière (80) configurée pour émettre, vers une surface de route (300), une lumière d'une pluralité de longueurs d'onde différentes dans une plage de longueurs d'onde de lumière visible;
un premier et un deuxième détecteur (81, 82), où, lorsque la plage de longueurs d'onde de la lumière visible est divisée en trois plages consistant en une plage de longueurs d'onde courtes, une plage de longueurs d'onde moyennes et une plage de longueurs d'onde longues en fonction d'une longueur d'onde, le premier détecteur comporte un premier filtre (81a) configuré pour laisser passer la lumière de la plage de longueurs d'onde courtes ou de la plage de longueurs d'onde moyennes, et le deuxième détecteur comporte un deuxième filtre (82a) configuré pour laisser passer la lumière de la plage de longueurs d'onde longues à une plage de longueurs d'onde proches de l'infrarouge, et dans lequel chaque détecteur comprend par ailleurs un dispositif de réception de lumière correspondant (81b, 82b), les détecteurs étant configurés pour détecter les intensités de réflexion de la lumière réfléchie présentant la pluralité de longueurs d'onde différentes, la lumière réfléchie étant la lumière émise par la source de lumière (80) et réfléchie sur la surface de route (300); et
un moyen de détermination de surface de route (70) configuré pour déterminer un type de surface de route (300), sur base des intensités de réflexion de la lumière réfléchie présentant la pluralité de longueurs d'onde différentes et détectée par les détecteurs (81, 82),
**caractérisé par le fait que** le déterminateur de surface de route (70) est configuré pour effectuer une comparaison sur chacune des intensités de réflexion de la lumière réfléchie présentant la pluralité de longueurs d'onde et détectée par les détecteurs (81, 82) avec un seuil respectif, où le déterminateur de surface de route (70) est par ailleurs configuré pour déterminer un type de surface de route (300) sur base de la comparaison.

2. Dispositif de détection de surface de route (100, 100a, 100b, 200) selon la revendication 1, dans lequel
la source de lumière (80) est configurée pour émettre de la lumière vers une surface de route (300) devant une roue (3) du véhicule (1), et
les détecteurs (81, 82) sont configurés pour détecter les intensités de réflexion de la lumière réfléchie émise par la source de lumière (80), réfléchie sur la surface de route (300) et retournant vers la source de lumière (80).

3. Dispositif de détection de surface de route (100, 100a, 100b, 200) selon la revendication 1, comprenant un phare (8), dans lequel le phare (8) comporte la source de lumière (80) configurée pour irradier une surface de route (300) devant une roue (3) du véhicule (1); et
les détecteurs (81, 82) sont disposés dans le phare (8), chacun des détecteurs (81, 82) étant configuré pour détecter la lumière réfléchie de la pluralité de longueurs d'onde comportant au moins un type de lumière visible, la lumière réfléchie émise par la source de lumière (80), réfléchie sur la surface de route (300) et retournée vers la source de lumière (80).

4. Dispositif de détection de surface de route (100, 100a, 100b, 200) selon l'une quelconque des revendications 1 à 3, dans lequel la source de lumière (80) est une source de lumière blanche.

5. Dispositif de détection de surface de route (100, 100a, 100b, 200) selon l'une quelconque des revendications 1 à 4, dans lequel la source de lumière (80) comporte une source de lumière LED.

6. Dispositif de détection de surface de route (100, 100a, 100b, 200) selon la revendication 5, dans lequel la source de lumière (80) comporte une source de lumière auxiliaire (84) configurée pour émettre de la lumière dans une plage de longueurs d'onde proches de l'infrarouge.

7. Véhicule (1) comportant le dispositif de détection de surface de route (100, 100a, 100b, 200) selon l'une quelconque des revendications 1 à 6.
